# EUROPEAN PATENT APPLICATION

(11) **EP 4 814 785 A1**
(43) Date of publication of application: **30.09.2026**
(21) Application number: 26166806.5
(22) Date of filing: 23.03.2026
(51) Int. Cl.: G06F 40/30

(54) **LANGUAGE MODEL WITH IMPROVED COMPUTATIONAL EFFICIENCY**

(30) Priority: 25.03.2025 US 202519090245
(71) Applicant: Intuit Inc., Mountain View, CA 94043 (US)
(72) Inventor: ARDAZI, Shai, Petah Tikva (IL); VETZLER, Matan, Petah Tikva (IL); COHEN, Linoy, Petah Tikva (IL); LEV, Guy, Petah Tikva (IL)
(74) Representative: D Young & Co LLP

(57) **Abstract**

One or more embodiments provide for a method. The method includes receiving an input to a language model having a first computational efficiency. The method also includes determining, from the input, a pruning threshold. The method also includes determining a pruning weight mask for the input from a combination of the pruning threshold and a predetermined weight mask defined for the language model. The method also includes modifying, using the pruning weight mask, the language model to generate a modified language model having a second computational efficiency greater than the first computational efficiency. The method also includes executing the modified language model on the input to generate a token. The method also includes returning the token.

## Description

### BACKGROUND

Language models (*e.g*., CHATGPT^{®} by OpenAI) are useful computing tools. A language model can receive a natural language command or query as an input (known as a prompt) and generate, as output, desired natural language text. The output may be, for example, an answer to a query, a summarization of a larger document, a suggestion for a next sentence or paragraph for a text under draft, *etc.*

Certain language models are known as large language models. A large language model may have billions of parameters, each of which are used in calculations when the large language model is executed on a prompt. Thus, language models may use substantial computational resources when executed, leading to increase latency (waiting time while the computer executes the language model), power consumption (electricity), and cost (in terms of use of available computational resources, as well as in dollars). A similar problem in computational costs may occur in other types of language models. For example, a small language model (*i.e.*, a non-large language model) may use fewer computational resources, but greater computational efficiency still may be desired for a small language model.

Thus, a technical problem is presented. The technical problem is how to improve the computational speed of a computer by increasing the computational efficiency of executing a language model.

### SUMMARY

Particular aspects are set out in the appended independent claims. Various optional embodiments are set out in the dependent claims. One or more embodiments provide for a method. The method includes receiving an input to a language model having a first computational efficiency. The method also includes determining, from the input, a pruning threshold. The method also includes determining a pruning weight mask for the input from a combination of the pruning threshold and a predetermined weight mask defined for the language model. The method also includes modifying, using the pruning weight mask, the language model to generate a modified language model having a second computational efficiency greater than the first computational efficiency. The method also includes executing the modified language model on the input to generate a token. The method also includes returning the token.

One or more embodiments also include a system. The system includes a computer processor and a data repository in communication with the computer processor and storing an input and a pruning threshold. The data repository also stores a predetermined weight mask and a pruning weight mask for the input. The system also includes a language model in communication with the computer processor and having a first computational efficiency. The system also includes a modified language model in communication with the computer processor and having a second computational efficiency greater than the first computational efficiency. The system also includes a classifier model in communication with the computer processor. The system also includes a server controller configured, when executed by the computer processor, to receive the input. The sever controller is also configured to execute the classifier model on the input to generate the pruning threshold. The sever controller is also configured to determine the pruning weight mask from a combination of the pruning threshold and the predetermined weight mask defined for the language model. The sever controller is also configured to modify, using the pruning weight mask, the language model to generate the modified language model.

One or more embodiments provide for another method. The method includes receiving a training input. The method also includes iterating a process until convergence, the process including executing a classifier model on the training input to generate an intermediate pruning threshold. The iterative process also includes generating, using the intermediate pruning threshold and a predetermined weight mask, an intermediate pruning weight mask. The iterative process also includes modifying, using the intermediate pruning weight mask, a language model to generate an intermediate modified language model. Using the intermediate pruning weight mask reduces at least one of a number of weights of the language model defined by the predetermined weight mask. The iterative process also includes executing the intermediate modified language model on the training input to generate an intermediate output. The iterative process also includes determining an intermediate computational efficiency of the intermediate modified language model when generating the intermediate output. The iterative process also includes determining an intermediate accuracy of the intermediate modified language model when generating the intermediate output. The iterative process also includes determining whether a combination of the intermediate computational efficiency and the intermediate accuracy satisfies an optimization value. The iterative process also includes generating, responsive to determining that the combination fails to satisfy the optimization value, a loss function. The iterative process also includes applying the loss function to both the classifier model and the language model to generate an intermediate classifier model and an intermediate language model. The iterative process also includes wherein convergence occurs when the optimization value is satisfied, and upon convergence the intermediate language model is a trained language model and the intermediate classifier model is a trained classifier model. The method also includes returning the trained language model and the trained classifier model.

Other aspects of one or more embodiments will be apparent from the following description and the appended claims.

### BRIEF DESCRIPTION OF DRAWINGS

FIG. 1A and FIG. 1B shows a computing system, in accordance with one or more embodiments.
FIG. 2 shows a flowchart of a method for increasing the computational efficiency of executing a language model, in accordance with one or more embodiments.
FIG. 3A and FIG. 3B shows an example of an in-use example of a method for increasing the computational efficiency of executing a language model, in accordance with one or more embodiments.
FIG. 3C, FIG. 3D, FIG. 3E, and FIG. 3F show examples of static weight pruning in a language model.
FIG. 4A and FIG. 4B shows a computing system and network environment, in accordance with one or more embodiments.

Like elements in the various figures are denoted by like reference numerals for consistency.

### DETAILED DESCRIPTION

One or more embodiments are directed to a technical solution to the technical problem of how to improve the computational speed of a computer by increasing the computational efficiency of executing a language model. Specifically, one or more embodiments relate to changing the language model, or to changing the execution of the model, to reduce the number of weights that the language model executes without significantly affecting the accuracy of the language model. In this manner, fewer computer processor cycles are used in the execution of the language model, and hence the computer processor executes the model more quickly.

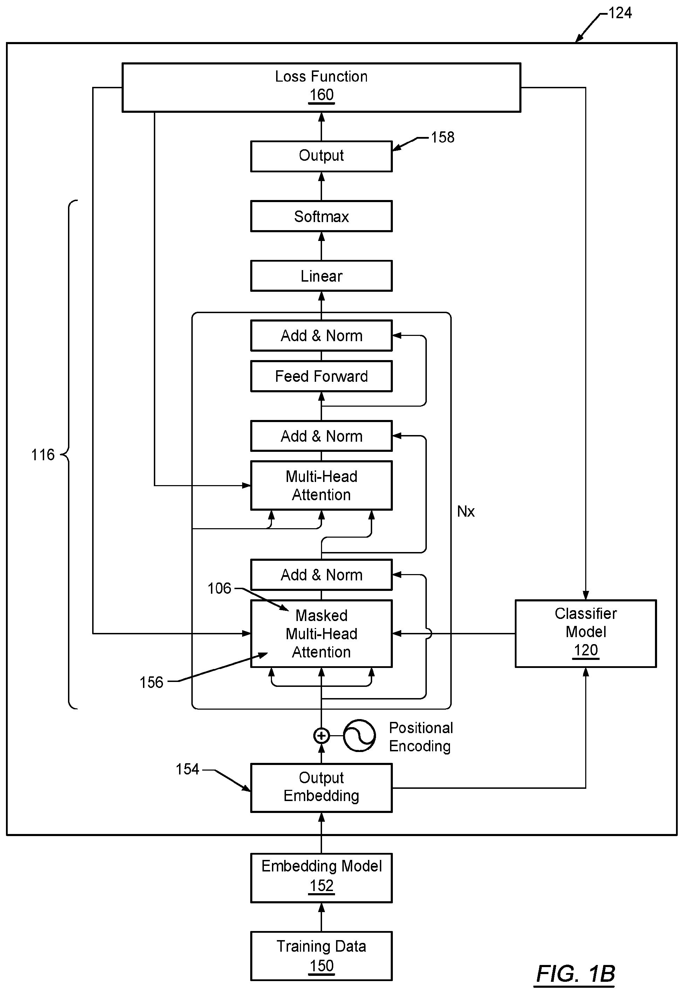

The following figures provide the details of how one or more embodiments accomplish the above-identified technical solution. In summary, the input to the language model is initially provided to a pruning classifier. As used herein, a pruning classifier is a classification machine learning model (*e.g.*, a logistic regression model) that is trained as described with respect to FIG. 1B. The pruning classifier outputs a pruning threshold, which depends on the contents of the input. The pruning threshold is a number that is used to determine which weights in the language model should be deactivated (or reduced). The higher the pruning threshold, the more weights in the language model will be deactivated.

In particular, the pruning threshold is compared to a predetermined weight mask defined for the language model. The predetermined weight mask is a matrix of values that are associated with each of the weights of the language model.

When a specific input is sent to the language model, the pruning threshold determined for that input is compared to each entry in the predetermined weight mask. The comparison is used to determine a pruning weight mask to be applied to the language model. In particular, when the value of an entry in the predetermined weight mask satisfies the pruning threshold, then the weight corresponding to the entry in the predetermined weight mask is set to zero (or reduced). Accordingly, again, the higher the pruning threshold, the greater the number of weights that are set to zero (or reduced).

The above-described process also may be understood by way of example. The following example is limited, compared to an operational system, but is simplified for clarity.

As indicated above, the predetermined weight mask is a matrix of numbers to which the output of the prediction model is compared in order to determine which weights of the language model to deactivate. In the example, the predetermined weight mask is a 1x3 matrix data structure containing of the numbers "0.1", "0.5,", and "0.7". Each of the numbers is associated with one of three weights of the language model, weight A, weight B, and weight C. Accordingly, "0.1" is associated with weight A, "0.5" is associated with weight B, and "0.7" is associated with weight C. Note that the weights themselves are not directly affected by the predetermined weight mask.

When a natural language query to the language model is received, the query is first input to a prediction model. The prediction model is trained (as described in relation to FIG. 1B) to predict a number that may be correlated (using the predetermined weight mask) to a number of weights of the language model that may be deactivated or reduced (as described below). The output of the prediction model may be referred to as a "pruning threshold."

For the purposes of this example, the pruning threshold is a number between 0 and 1. In the example, the prediction model outputs a pruning threshold of "0.6" in response to the natural language query input. The pruning threshold of "0.6" is a prediction that the language model may use fewer weights to process the query relative to a smaller prediction value (*e.g*., "0.1" or "0.5"). Determining exactly which weights may be deactivated depends on the predetermined weight mask.

Specifically, as used here, the predetermined weight mask serves as a series of threshold values used to determine which weights to deactivate, based on the prediction value. Continuing the example, the pruning threshold of "0.6" is compared to each of the values in the predetermined weight mask. Because "0.6" is greater than "0.1", weight A will be set to "0." Because "0.6" is greater than "0.5," weight B will be set to "0." However, because "0.6" is lower than "0.7," weight C remains unchanged. (In a different embodiment, one or more of the deactivated weights may be reduced rather than set to zero). By deactivating some of the weights, the language model may be executed more quickly and efficiently with fewer processing cycles of a computer processor.

Changing the values of the weights is accomplished by using a pruning mask. The pruning mask is a matrix of numbers which is multiplied by the matrix of weights of the language model. The pruning mask values, in the example, are either "0s" or 1s." Specifically, in the example, the pruning mask is "0, 0, 1" and the matrix of weights is "weight A, weight B, weight C." The pruning mask is "0, 0, 1" in the example because when the pruning threshold was compared to the predetermined weight mask (as described above), a determination was made that weight A and weight B should be set to zero, but weight C should remain the same. When the pruning mask is multiplied by the matrix of weights, the matrix of weights becomes "0, 0, weight C." Thus, the resulting language model is modified.

Once the selected weights of the language model are deactivated (set to zero), the natural language query is fed as input to the modified language model (*i.e.*, the language model with weights A and B set to "0"). The resulting output of the modified language model is then returned.

Note that the process is "dynamic," as the decision regarding which weights will be deactivated depends directly on the pruning threshold output by the prediction model. In turn, the output of the prediction model depends directly on the natural language query, which may change from time to time. Stated differently, different language model weights may be deactivated when different language model queries are received, because different queries may cause the prediction model to output different pruning thresholds. Note, however, the "predetermined weight mask" may not change from query to query (though the predetermined weight mask could be adjusted periodically, if desired).

The above-described scheme will automatically deactivate or reduce weights which contribute to the output of the language model. Additionally, because the deactivated or reduced weights are determined based on the input, the accuracy of the language model either is not affected, or is degraded less than deactivating random weights or deactivating a static, predetermined number of weights in the language model.

Application of the pruning weight mask to the language model generates a modified language model in that the weights in the attention heads of the language model are changed. Thus, the behavior of the model changes. However, importantly, the accuracy of the language model is not degraded substantially because the weights that contribute little or nothing to the output are the weights that are deactivated. Thus, the modified language model is computationally more efficient, relative to the language model prior to modification, without substantially affecting the accuracy of the model.

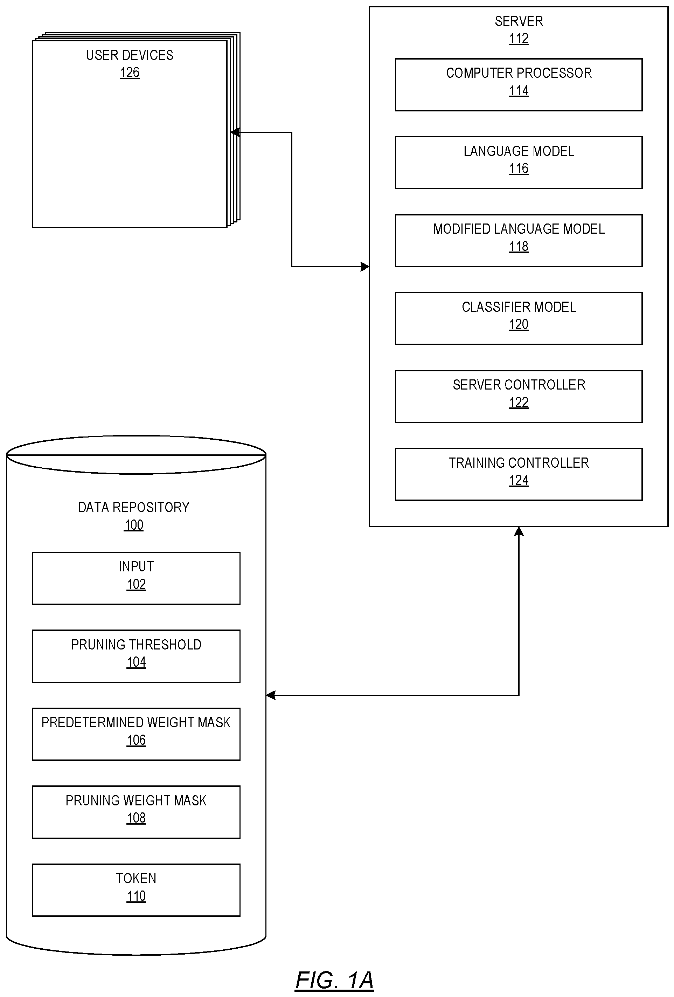

Attention is now turned to the figures. FIG. 1A and FIG. 1B shows a computing system, in accordance with one or more embodiments. The system shown in FIG. 1A includes a data repository (100). The data repository (100) is a type of storage unit or device (*e.g.*, a file system, database, data structure, or any other storage mechanism) for storing data. The data repository (100) may include multiple different, potentially heterogeneous, storage units and/or devices.

The data repository (100) stores an input (102). The input (102) is a natural language text statement or query. The input (102) may be a prompt to the language model (116), defined below. A prompt is one or more natural language statements that define a command to the language model (116), possibly together with additional instructions regarding how the language model (116) should process the command.

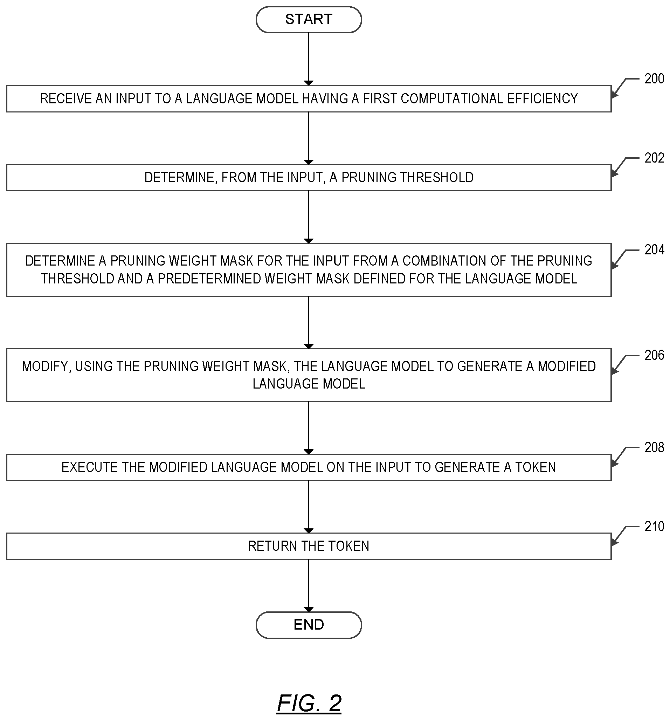

The data repository (100) also stores a pruning threshold (104). The pruning threshold (104) is a number output by the classifier model (120) (defined below). The pruning threshold (104) is used to determine a specific pruning weight mask (108) (defined below) based on the input (102), as explained with respect to step 204 of FIG. 2. Generation of the pruning threshold (104) is described with respect to step 202 of FIG. 2.

The data repository (100) also stores a predetermined weight mask (106). The predetermined weight mask (106) is a matrix of values, where each entry in the matrix corresponds to one of the weights associated with the language model (116) (defined below). The values in the predetermined weight mask (106) are not the weights themselves, but rather values that represent how likely a given weight of the language model (116) will contribute substantially to the generation of an output, given input (102). The predetermined weight mask (106) is used in determining the pruning weight mask (108), as described with respect to step 204 of FIG. 2. Generation of the predetermined weight mask (106) is described with respect to FIG. 1B.

The data repository (100) also stores a pruning weight mask (108). The pruning weight mask (108) is a matrix of values to be applied to the weights of the language model (116) (defined below). In an embodiment, the pruning weight mask (108) may be composed of zeros and ones, such that weights of the language model (116) are set to zero or to their predetermined weight values when the pruning weight mask (108) is multiplied by the weight values of the language model (116). However, the pruning weight mask (108) may be values between zero and one in different embodiments. Use of the pruning weight mask (108) is described with respect to step 206 of FIG. 2.

The data repository (100) also stores a token (110). The token (110) is a group of alphanumeric text. For example, the token (110) may be a word, a phrase, a sentence, a paragraph, multiple paragraphs *etc.* With respect to one or more embodiments, the token (110) is the output of the modified language model (118). Generation of the token (110) is described with respect to step 208 of FIG. 2.

The system shown in FIG. 1A may include other components. For example, the system shown in FIG. 1A also may include a server (112). The server (112) is one or more computer processors, data repositories, communication devices, and supporting hardware and software. The server (112) may be in a distributed computing environment. The server (112) is configured to execute one or more applications, such as the language model (116), the modified language model (118), the classifier model (120), the server controller (122), or the training controller (124). An example of a computer system and network that may form the server (112) is described with respect to FIG. 5A and FIG. 5B.

The server (112) includes a computer processor (114). The computer processor (114) is one or more hardware or virtual processors which may execute computer readable program code that defines one or more applications, such as the language model (116), the modified language model (118), the classifier model (120), the server controller (122), or the training controller (124). An example of the computer processor (114) is described with respect to the computer processor(s) (502) of FIG. 5A.

The server (112) also includes a language model (116). The language model (116) is a natural language processing machine learning model. An example of the language model (116) may be a large language model, such as CHATGPT^{®} by OpenAI. However, different language models may be used. Use of the language model (116) is described with respect to FIG. 2.

The language model (116) may be characterized as having a first computational efficiency (relative to the second computational efficiency of the modified language model (118), defined below). As used herein, "computational efficiency" is defined in inverse proportion to the number of processor cycles that the computer processor (114) uses to execute the language model (116) on the input (102). Thus, the higher the number of processor cycles that the computer processor (114) uses to execute the language model (116), the lower the first computational efficiency. Conversely, the lower the number of processor cycles that the computer processor (114) uses to execute the language model (116), the higher the first computational efficiency.

The server (112) also includes a modified language model (118). The modified language model (118) is generated from the language model (116) by modifying the weights of the language model (116), as described with respect to FIG. 2. Thus, the modified language model (118) is modified relative to the language model (116). Generation of the modified language model (118) is described with respect to FIG. 2.

The modified language model (118) may be characterized as having a second computational efficiency (relative to the first computational efficiency of the language model (116)). The definition of "computational efficiency" for the second computational efficiency is the same as for the first computational efficiency. Thus, the higher the number of processor cycles that the computer processor (114) uses to execute the modified language model (118), the lower the second computational efficiency. Conversely, the lower the number of processor cycles that the computer processor (114) uses to execute the modified language model (118), the higher the second computational efficiency.

In an embodiment, such as described with respect to FIG. 2, the modified language model (118) has a higher computational efficiency than the classifier model (120). Thus, the second computational efficiency is higher than the first computational efficiency. The difference in computational efficiency is caused by the pruning weight mask (108), which eliminates or reduces a number of the weights being used in the modified language model (118), relative to the language model (116). Because fewer weights are applied in the attention heads of the modified language model (118) (relative to the language model (116)) (see *e.g.*, FIG. 1B), the modified language model (118) is more efficient. Accordingly, the computer processor (114) may execute the modified language model (118) more quickly than the computer processor (114) may execute the language model (116).

The server (112) also stores a classifier model (120). The classifier model (120) is a classification machine learning model (*e.g.*, a logistic regression model, a support vector machine, a K-nearest neighbor algorithm, *etc.*) The input to the classifier model (120) is the input (102). The output of the classifier model (120) is the pruning threshold (104). Use of the classifier model (120) is described with respect to FIG. 2.

The server (112) also may include a server controller (122). The server controller (122) is software or application specific hardware which, when executed by the computer processor (114), controls and coordinates operation of the software or application specific hardware described herein. Thus, the server controller (122) may control and coordinate execution of the language model (116), the modified language model (118), the classifier model (120), the server controller (122), or the training controller (124).

The server (112) also may include a training controller (124). The training controller (124) is software or application specific hardware which, when executed by the computer processor (114), trains one or more machine learning models (*e.g*., the classifier model (120)). The training controller (124) is described in more detail with respect to FIG. 1B. In an embodiment, the training controller (124) may be used to train the classifier model (120), as described with respect to FIG. 1B; however, the training controller (124) also may be used to train the language model (116).

The system shown in FIG. 1A also may include one or more user devices (126). The user devices (126) are computing systems (*e.g*., the computing system (500) shown in FIG. 5A) that communicate with the server (112).

The user devices (126) may be considered remote or local. A remote user device is a device operated by a third-party (*e.g*., an end user of a chatbot) that does not control or operate the system of FIG. 1A. Similarly, the organization that controls the other elements of the system of FIG. 1A may not control or operate the remote user device. Thus, a remote user device may not be considered part of the system of FIG. 1A.

In contrast, a local user device is a device operated under the control of the organization that controls the other components of the system of FIG. 1A. Thus, a local user device may be considered part of the system of FIG. 1A.

Attention is now turned to FIG. 1B. FIG. 1B shows the details of the training controller (124) of FIG. 1A. Thus, the training controller (124) in FIG. 1B is the training controller (124) in FIG. 1A.

The training controller (124) is the program that trains the language model (116) and the classifier model (120), defined in FIG. 1A. The training program implements a training procedure. The training procedure includes iteratively executing the language model (116) and the classifier model (120) together on known, predetermined inputs known as training data (150). The predetermined inputs may be the input (102). Each iteration is the method of FIG. 2. After each iteration, both the language model (116) and the classifier model (120) are modified using a loss function (described below). The loss function adjusts at least one of the weights of the language model (116), the predetermined weight mask (106), and the classifier model (120).

The iterative procedure continues until convergence. Convergence occurs when a combination of the weights of the language model (116), the predetermined weight mask (106), and the parameters of the classifier model (120) change by less than a predetermined amount between two or more subsequent iterations of the training procedure. Alternatively, convergence occurs after a predetermined number of iterations of the training process.

In more detail, each example alphanumeric input of the training data (150) is input to an embedding model (152). The embedding model (152) generates an output embedding (154). The output embedding (154) is provided as input to both the language model (116) and the classifier model (120).

The classifier model (120) executes on the output embedding (154) to generate a threshold value, as described with respect to FIG. 2. The threshold value is applied to a predetermined weight mask (106) to generate a pruning mask (*i.e.*, the pruning weight mask (108) described in FIG. 1A). The pruning weight mask (108) modifies the weights of the attention heads of a multi-head attention module (156) of the language model (116). Modification of the weights using the pruning weight mask (108) is described with respect to FIG. 2.

The remaining layers of the language model (116) then generate an output (158). The output (158) may be a vector data structure (a matrix composed of features and values for the features) that a computer may interpret into the token (110).

The output (158) is provided to a loss function (160). The loss function (160) compares the output (158) to a known output, or considers the degree of change between the current output (158) and the output of the prior iteration. The loss function (160) is described in further detail below. The output of the loss function (160) is a vector that is used to change the weights of the two models (e.g., the weights of the attention heads of a multi-head attention module (156) of the language model (116)), the weights of the linear layers of the language model (116), the predetermined weight mask (106), and the parameters of the classifier model (120). Thus, the language model (116) and the classifier model (120) are trained concurrently, wherein at each iteration the effect that the classifier model (120) has on the language model (116) changes.

As mentioned above, the training process then repeats. Again, the training process continues to repeat until convergence of the ensemble, the language model (116), and the classifier model (120).

A formal definition of the loss function (160) is now provided. The loss function (160) is a cross-entropy loss. With respect to the language model (116), the target of the loss function (160) applied to the language model (116) is to minimize a lower perplexity, 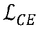 :${L}_{CE} \left(θ\right) = \frac{1}{N} {\sum }_{j = 1}^{N} log {p}_{θ} \left({y}_{j}\left|{x}_{j}\right.\right)$

Definitions of the symbology in equation (1) are provided below after equation (3).

For the portion of the loss function applied to the classifier model (120) *(i.e.,* the pruning loss), the Target is to minimize 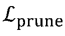 (and thereby to maximize the number of weights that will be pruned *(i.e.,* set to zero or reduced)). Thus, for the portion of the loss function (160) applied to the classifier model (120), the loss function (160) is defined as:
${L}_{prune} \left(θ,∅\right) = \frac{1}{N} {\sum }_{j = 1}^{N} {activeFrac}_{j} \left(θ,∅\right)$

Definitions of the symbology in equation (1) are provided below after equation (3).

The loss function (160) is the combination of equation (1) and equation (2). In an embodiment, the loss function (160) is simply the addition of equation (1) to equation (2). However, a tuning constant may be applied to the loss function applied to the classifier model (120). Thus, the loss function (160) is defined as:
${L}_{total} \left(θ,∅\right) = {L}_{CE} + α {L}_{prune}$

From equation 3, one can see that minimizing 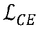 directly corresponds to reducing perplexity.

The definitions of the terms used in equation (1) and equation (2) are as follows:
1. *xⱼ* is the j-th input (*e.g.*, a token)
2. yⱼ is the label (*e.g*., next token)
3. *N* is the number of training samples
4. *θ* is the parameters of the network
*5. p_{θ}*(*yⱼ*|*xⱼ*) is the probability of the correct label/token yⱼ, as predicted by the language model (116) with parameters *θ*.

Additional details of the training process described above are now presented.

Let *mᵢ* be the movement score for parameter *i.* One or more embodiments create a binary mask *mⱼ,* for the j-th input, whose i-th component is:
${M}_{j , i} = \left\{\begin{matrix}1 , if {m}_{i} \geq {T}_{j} , \\ 0 , otherwise .\end{matrix}\right.$

Hence, weights with *mᵢ* < *Tⱼ* are pruned for the *j*-th input.

The fraction of pruned weights for the j-th input is:
${activeFrac}_{j} \left(θ,∅\right) = \frac{{\sum }_{i = 1}^{\left|θ\right|} 1 \left\{{m}_{i}\geq {T}_{j}\right\}}{\left|θ\right|}$

Where:
${prunedFrac}_{j} \left(θ,∅\right) = \frac{{\sum }_{i = 1}^{\left|θ\right|} 1 \left\{{m}_{i}<{T}_{j}\right\}}{\left|θ\right|}$

And
${activeFrac}_{j} \left(θ,∅\right) = 1 - {prunedFrac}_{j} \left(θ,∅\right)$

Where **1**{·} is the indicator function:
${T}_{j} = {G}_{∅} \left({x}_{j}\right)$
where *Tⱼ* is the threshold (or fraction) that determines which weights are pruned; for example, *j*. Thus, the training process prunes as many weights as possible, while yet maintaining as high of an accuracy as possible. Stated differently, the training procedure described with respect to FIG. 1B balances the ensemble of the language model (116) and the classifier model (120), such that the maximum number of weights of the language model (116) may be pruned using the pruning weight mask (108), while concurrently minimizing degradation of the accuracy of the language model (116).

Using the formal terms above, the training method may be performed as follows. Initially, a training input is received. Then, the training controller iterates a training process until convergence. The training process includes executing a classifier model on the training input to generate an intermediate pruning threshold. The training process also includes generating, using the intermediate pruning threshold and a predetermined weight mask, an intermediate pruning weight mask. The training process also includes modifying, using the intermediate pruning weight mask, a language model to generate an intermediate modified language model. Using the intermediate pruning weight mask reduces at least one of a number of weights of the language model defined by the predetermined weight mask.

The training process also includes executing the intermediate modified language model on the training input to generate an intermediate output. The training process also includes determining an intermediate computational efficiency of the intermediate modified language model when generating the intermediate output. The training process also includes determining an intermediate accuracy of the intermediate modified language model when generating the intermediate output.

The training process also includes determining whether a combination of the intermediate computational efficiency and the intermediate accuracy satisfies an optimization value. In an embodiment, the optimization value is satisfied when the loss function reaches a maximum. In another embodiment, the optimization value may be a difference between prior computational efficiency in the iterative training process and a current computational efficiency in the iterative process. If the difference is zero (or some other predefined number), then the language model and the classification model may be considered to have reached optimum performance. Alternatively, the optimization value may be a predetermined threshold number that indicates when the training process is considered completed.

In any case, during the training process, the cross entropy loss term is changed, during the training process, to minimize a perplexity of the language model. Additionally, during the training process, the pruning loss term and the tuning constant are changed, to minimize a number of weights used by the language model.

The training process also includes generating, responsive to determining that the combination fails to satisfy the optimization value, a loss function. The loss function is generated according to the definitions provided above. The training process also includes applying the loss function to both the classifier model and the language model to generate an intermediate classifier model and an intermediate language model.

Convergence occurs when the optimization value is satisfied. Upon convergence, the intermediate language model is a trained language model and the intermediate classifier model is a trained classifier model. The trained language model and the trained classifier model are returned *(e.g.,* deployed for production, stored for future use, *etc.*)*.*

In an embodiment, as shown in the formal definitions above, the loss function may be a combination of a cross entropy loss term applicable to the language model and a pruning loss term applicable to the classification model. In an embodiment, the loss function also may include a tuning constant applied to the pruning loss term.

While FIG. 1A and FIG. 1B shows a configuration of components, other configurations may be used without departing from the scope of one or more embodiments. For example, various components may be combined to create a single component. As another example, the functionality performed by a single component may be performed by two or more components.

FIG. 2 shows a flowchart of a method for increasing the computational efficiency of executing a language model, in accordance with one or more embodiments. The method of FIG. 2 may be implemented using the system of FIG. 1A and one or more of the steps may be performed on or received at one or more computer processors. The method of FIG. 2 may be referred to as a dynamic process, because the process of determining which model weights to deactivate (by setting to zero) depends ultimately on the original input to the language model. Because the input may change, the modified model generated as described below may be different for each different input.

Step 200 includes receiving an input to a language model having a first computational efficiency. The input may be received from a user device, a computer process, or retrieved from a data repository containing inputs. In any case, the input is received by the computer processor and is intended for execution by the language model.

Step 202 includes determining, from the input, a pruning threshold. Determining the pruning threshold may include executing a classifier model on the input to output the pruning threshold. The classification model is trained as described with respect to FIG. 1B.

In an alternative embodiment, the pruning threshold may be a number output by some rule or policy, or which is predetermined. Thus, the pruning threshold need not necessarily be an output of the classification model.

Step 204 includes determining a pruning weight mask for the input from a combination of the pruning threshold and a predetermined weight mask defined for the language model. As described with respect to FIG. 1A, the predetermined weight mask is a number of pruning values corresponding to the number of weights. Thus, when the pruning threshold is output by the classification model, the server controller compares the pruning threshold to each of the number of pruning values in the predetermined weight mask. As a result of the comparison, the server controller identifies a subset of the number of pruning values (of the predetermined weight mask) that satisfy the pruning threshold.

In an embodiment, the server controller then identifies a subset of the number of weights (of the predetermined weight mask) corresponding to the subset of the number of pruning values which satisfied the pruning threshold output by the classification model. The server controller then sets to zero (or reduces) the weights of the language model that correspond to the number of pruning values. Stated differently, determining the pruning weight mask includes modifying the predetermined weight mask by identifying the number of reduction values for the subset of the number of weights. The reduction values are either zero (*i.e.*, the number zero is multiplied by the weight of the language model) or a number less than one (*i.e.*, a fraction less than one is multiplied by the weight of the language model). The remaining weights of the language model are not altered by the pruning weight mask.

In other words, each of the number of reduction values may be zero such that, when the pruning weight mask is applied to the number of weights, each subset of the number of weights of the language model is set to zero. However, if the reduction value is between zero and one, then modifying the number of weights is performed according to the pruning weight mask by reducing each subset of the number of weights by the reduction value.

Step 206 includes modifying, using the pruning weight mask, the language model to generate a modified language model having a second computational efficiency greater than the first computational efficiency. Specifically, the language model is modified by multiplying the weights of the language model that correspond to the subset of the pruning weight mask which satisfied the pruning threshold. As a result, the modified language model includes a number of weights whose values are reduced to zero or are reduced. Thus, modifying the language model causes the language model to use fewer execution cycles of a computer processor to process the input, relative to a number of execution cycles of the computer processor used by the language model to process the input prior to modifying the language model.

Step 208 includes executing the modified language model on the input to generate a token. The original input is provided as input to the modified language model. The output of the modified language model is a token. Again, a token is a word, phrase, paragraph, multiple paragraphs, one or more numbers, *etc.*

Step 210 includes returning the token. The token may be returned by storing the token in a data repository. The token may be returned by transmitting the token to a display device of a user device. The token may be returned by providing the token to some other automated process that called the language model to process the input.

Again, the method of FIG. 2 is a dynamic pruning process. Changing the input may change the pruning threshold at step 202. Changing the pruning threshold changes the pruning weight mask, as described with respect to step 204. Changing the pruning weight mask generates a differently modified model at step 206. Changing the model, in turn, may change the efficiency with which the modified model is executed when the input is provided to the modified model. Thus, again, the method of FIG. 2 may be referred to as a dynamic process.

The method of FIG. 2 may be modified by adding steps, removing steps, or modifying the steps described. In an example, the method of FIG. 2 also may include generating the predetermined weight mask defined for the language model. The predetermined weight mask may be determined during training of the ensemble of the language model and the classification model. The predetermined weight mask also may be determined by some other process, or may be generated by a computer scientist.

In another example, the method of FIG. 2 may include training the language model and the classification model. Again, the training process is described with respect to FIG. 1B.

While the various steps in the flowchart of FIG. 2 are presented and described sequentially, at least some of the steps may be executed in different orders, may be combined or omitted, and at least some of the steps may be executed in parallel. Furthermore, the steps may be performed actively or passively.

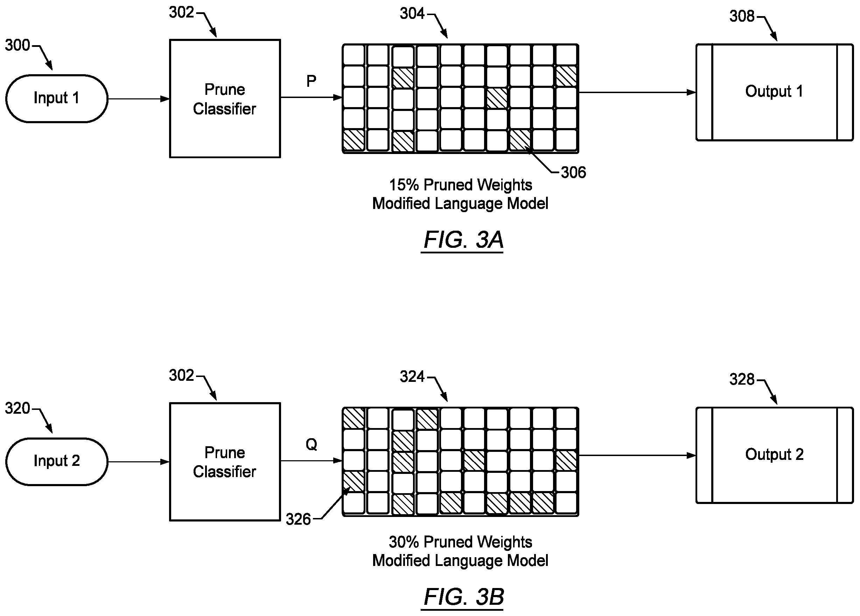

FIG. 3A and FIG. 3B shows an example of an in-use example of a method for increasing the computational efficiency of executing a language model, in accordance with one or more embodiments. The following example is for explanatory purposes only and not intended to limit the scope of one or more embodiments.

FIG. 3A shows a first input (300) originally intended for execution by a language model. The first input (300) is provided as input to a pruning classifier (302) (*e.g.*, the classifier model (120) of FIG. 1A). The output of the pruning classifier (302) is a value, "P," which is then compared to a predetermined weight mask of pruning values. If the output, "P," is less than a pruning value in the predetermined weight mask, then the corresponding value in the pruning weight mask is set to zero. If the output, "P," is greater than or equal to the pruning value in the predetermined weight mask, then the corresponding value in the pruning weight mask is set to the number "1."

The matrix that defines the pruning weight mask is then multiplied by the matrix of weights of the language model that correspond to the pruning values of the pruning weight mask. Thus, the weights of the language model are set to zero when the pruning value output by the pruning classifier (302) is less than the pruning threshold of an entry in the predetermined weight mask that corresponds to the language model weight.

The result is a modified language model (304) in which several weights are set to zero. For simplicity of understanding, the modified language model (304) in FIG. 3A is represented in an abstract manner by a table of weights, represented by boxes (e.g., cell (306) in the modified language model (304)). More properly, a language model is represented by the language model (116) in FIG. 1B. In FIG. 3A, fifteen percent of the weights (the cells containing a hash pattern) are set to zero, such as in cell (306). As a result, when the modified language model (304) executes on the first input (300) to generate the output 1 (308), the computer processor uses fewer processing cycles (*e.g.*, fifteen percent fewer, though the actual computational savings may be more or less). Accordingly, computational resources are saved, latency (the time spent waiting for the output 1 (308)) is reduced, and money and electrical power are saved. Stated differently, the computing power of the computer processor is effectively increased.

FIG. 3B shows largely the same example as FIG. 3A. Thus, the process of receiving the input 2 (320), the operation of the pruning classifier (302), and the process of modifying the language model is largely similar to the process described with respect to FIG. 3A. However, FIG. 3B shows how one or more embodiments are flexible, as the language model may be modified specifically based on the different inputs received. Namely, the language model may need to use fewer weights to process some inputs relative to other inputs, whereby additional computational cost savings may be achieved.

Specifically, when the input 2 (320) is provided as input to the pruning classifier (302), a different pruning threshold, "Q" is output. In the example, Q is greater than P. Thus, when the pruning threshold, Q is compared to the predetermined weight mask, more of the weights of the language model will be set to zero. Thus, the modified language model (324) is not the same as the modified language model (304), but rather is modified specifically based on the input 2 (320) instead of based on the first input (300). Specifically, as indicated above, more of the weights in the modified language model (324) are set to zero, as indicated by the greater number of cells highlighted by hash patterns (e.g., cell (326)). Thus, additional computational savings are achieved when the modified language model (324) determines the output (328), because the prediction of the pruning classifier (302) (*i.e.*, the pruning threshold) indicated that the input 2 (320) could be processed by the language model using fewer weights but without significant loss of accuracy. Accordingly, the overall amount of computational resources saved may be maximized based on the input received to the language model.

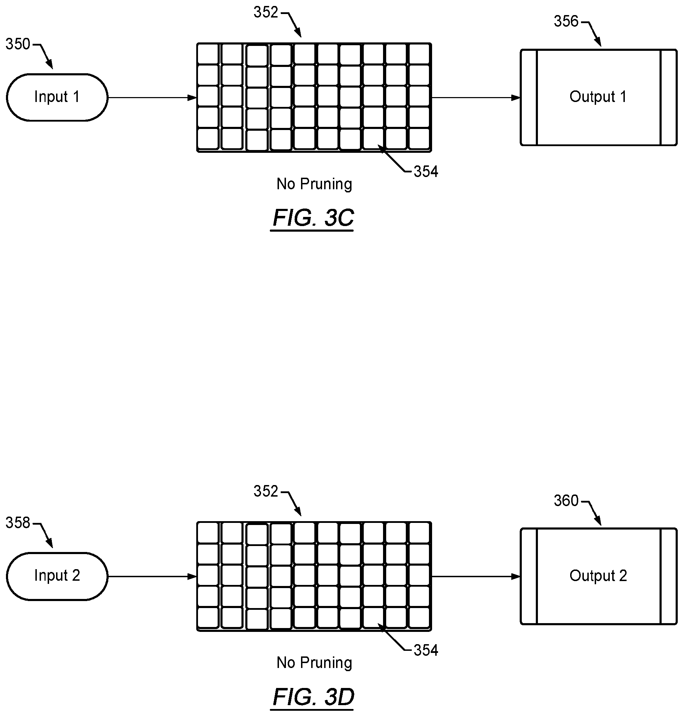

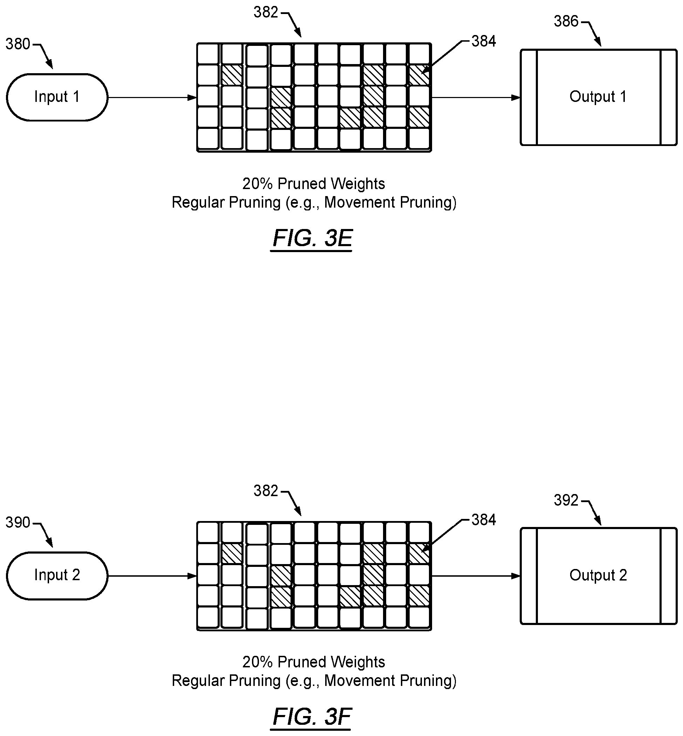

To highlight the differences between one or more embodiments and known language model processing techniques, attention is turned to FIG. 3C, FIG. 3D, FIG. 3E, and FIG. 3F. FIG. 3C through FIG. 3F show examples of static weight pruning in a language model, without using the flexible and efficient approach of one or more embodiments. FIG. 3C and FIG. 3D should be considered together. FIG. 3E and FIG. 3F should be considered together.

In FIG. 3C and FIG. 3D, no pruning is performed. In FIG. 3C, a first input (350) is provided to language model (352). The language model includes a matrix of weights, shown as cells (*e.g.*, cell (354) in the language model (352). All of the weights are used when the language model (352) executes on the first input (350). The result is a first output (356), which is returned. However, because all weights are used when executing the language model (352), no computational efficiency is achieved.

Similarly, on FIG. 3D, a second input (358) is provided to language model (352). The language model includes the same matrix of weights in FIG. 3C, shown as cells (*e.g.*, cell (354) in the language model (352). All of the weights are used when the language model (352) executes on the second input (358). The result is a second output (360), which is returned. However, because all weights are used when executing the language model (352), no computational efficiency is achieved.

Furthermore, even though the first input (350) could be computed with fewer weights than the second input (352) with little or no loss in accuracy, nevertheless all weights are used in both cases. Thus, no increase in computational efficiency is achieved when processing one input relative to the other.

In FIG. 3E and FIG. 3F, a static pruning technique is applied the model. As used herein, the term "static pruning" means that the weights of the language model are pruned without regard to the input.

Thus, in FIG. 3E, first input (380) is provided to a language model (382). A predetermined number of weights have been modified, as determined by a training process. Thus, for example, the weight in cell (384) (and the other cells indicated by hash marks) has been modified. As a result, a greater computational efficiency is achieved when the modified language model processes the first input (380) to generate a first output (386).

In FIG. 3F, a second input (390) is provided to the language model (382). However, the same scheme for modifying the weights of the language model (382) was applied to the language model (382). Thus, for example, the same weights (e.g. cell (384)) as in FIG. 3E were modified. The language model (382) generates output 2 (392).

As with the example of FIG. 3C and FIG. 3D, the first input (390) could be computed with fewer weights than the second input (392) with little or no loss in accuracy; nevertheless, the same modified weights are used in both cases. Thus, there is no increase in computational efficiency in executing the language model (382) on the first input (380) relative to the second input (390), even though the first output (386) theoretically could have been computed with greater efficiency than the second output (392).

However, the different and improved computational efficiencies of processing the two inputs are achieved in the examples of FIG. 3A and FIG. 3B, which again are examples of the method of FIG. 2. Thus, the background example methods of FIG. 3C through FIG. 3F highlight the improved computational efficiency of one or more embodiments.

One or more embodiments may be implemented on a computing system specifically designed to achieve an improved technological result. When implemented in a computing system, the features and elements of the disclosure provide a significant technological advancement over computing systems that do not implement the features and elements of the disclosure. Any combination of mobile, desktop, server, router, switch, embedded device, or other types of hardware may be improved by including the features and elements described in the disclosure.

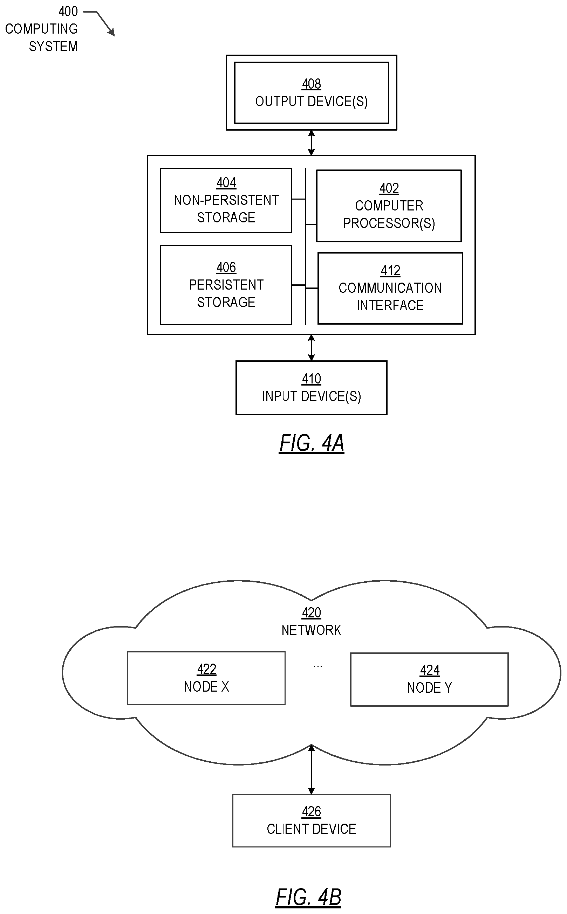

For example, as shown in FIG. 4A, the computing system (400) may include one or more computer processor(s) (402), non-persistent storage device(s) (404), persistent storage device(s) (406), a communication interface (408) (*e.g*., Bluetooth interface, infrared interface, network interface, optical interface, *etc.*), and numerous other elements and functionalities that implement the features and elements of the disclosure. The computer processor(s) (402) may be an integrated circuit for processing instructions. The computer processor(s) (402) may be one or more cores, or micro-cores, of a processor. The computer processor(s) (402) includes one or more processors. The computer processor(s) (402) may include a central processing unit (CPU), a graphics processing unit (GPU), a tensor processing unit (TPU), combinations thereof, *etc.*

The input device(s) (410) may include a touchscreen, keyboard, mouse, microphone, touchpad, electronic pen, or any other type of input device. The input device(s) (410) may receive inputs from a user that are responsive to data and messages presented by the output device(s) (412). The inputs may include text input, audio input, video input, *etc.*, which may be processed and transmitted by the computing system (400) in accordance with one or more embodiments. The communication interface (408) may include an integrated circuit for connecting the computing system (400) to a network (not shown) (e.g., a local area network (LAN), a wide area network (WAN) such as the Internet, mobile network, or any other type of network) or to another device, such as another computing device, and combinations thereof.

Further, the output device(s) (412) may include a display device, a printer, external storage, or any other output device. One or more of the output device(s) (412) may be the same or different from the input device(s) (410). The input device(s) (410) and output device(s) (412) may be locally or remotely connected to the computer processor(s) (402). Many different types of computing systems exist, and the aforementioned input device(s) (410) and output device(s) (412) may take other forms. The output device(s) (412) may display data and messages that are transmitted and received by the computing system (400). The data and messages may include text, audio, video, *etc.*, and include the data and messages described above in the other figures of the disclosure.

Software instructions in the form of computer readable program code to perform embodiments may be stored, in whole or in part, temporarily or permanently, on a non-transitory computer readable medium such as a solid state drive (SSD), compact disk (CD), digital video disk (DVD), storage device, a diskette, a tape, flash memory, physical memory, or any other computer readable storage medium. Specifically, the software instructions may correspond to computer readable program code that, when executed by the computer processor(s) (402), is configured to perform one or more embodiments, which may include transmitting, receiving, presenting, and displaying data and messages described in the other figures of the disclosure. Additionally, or alternatively, a computer readable program code can include transient media such as carrier waves and transmission media.

The computing system (400) in FIG. 4A may be connected to, or be a part of, a network. For example, as shown in FIG. 4B, the network (420) may include multiple nodes (*e.g.*, node X (422) and node Y (424), as well as extant intervening nodes between node X (422) and node Y (424)). Each node may correspond to a computing system, such as the computing system shown in FIG. 4A, or a group of nodes combined may correspond to the computing system shown in FIG. 4A. By way of an example, embodiments may be implemented on a node of a distributed system that is connected to other nodes. By way of another example, embodiments may be implemented on a distributed computing system having multiple nodes, where each portion may be located on a different node within the distributed computing system. Further, one or more elements of the aforementioned computing system (400) may be located at a remote location and connected to the other elements over a network.

The nodes (*e.g.*, node X (422) and node Y (424)) in the network (420) may be configured to provide services for a client device (426). The services may include receiving requests and transmitting responses to the client device (426). For example, the nodes may be part of a cloud computing system. The client device (426) may be a computing system, such as the computing system shown in FIG. 4A. Further, the client device (426) may include or perform all or a portion of one or more embodiments.

The computing system of FIG. 4A may include functionality to present data (including raw data, processed data, and combinations thereof) such as results of comparisons and other processing. For example, presenting data may be accomplished through various presenting methods. Specifically, data may be presented by being displayed in a user interface, transmitted to a different computing system, and stored. The user interface may include a graphical user interface (GUI) that displays information on a display device. The GUI may include various GUI widgets that organize what data is shown, as well as how data is presented to a user. Furthermore, the GUI may present data directly to the user, e.g., data presented as actual data values through text, or rendered by the computing device into a visual representation of the data, such as through visualizing a data model.

Thus, from one perspective, there has now been described a method which includes receiving an input to a language model having a first computational efficiency. The method also includes determining, from the input, a pruning threshold. The method also includes determining a pruning weight mask for the input from a combination of the pruning threshold and a predetermined weight mask defined for the language model. The method also includes modifying, using the pruning weight mask, the language model to generate a modified language model having a second computational efficiency greater than the first computational efficiency. The method also includes executing the modified language model on the input to generate a token. The method also includes returning the token.

As used herein, the term "connected to" contemplates multiple meanings. A connection may be direct or indirect (*e.g*., through another component or network). A connection may be wired or wireless. A connection may be a temporary, permanent, or a semi-permanent communication channel between two entities.

The various descriptions of the figures may be combined and may include, or be included within, the features described in the other figures of the application. The various elements, systems, components, and steps shown in the figures may be omitted, repeated, combined, or altered as shown in the figures. Accordingly, the scope of the present disclosure should not be considered limited to the specific arrangements shown in the figures.

In the application, ordinal numbers (*e.g.*, first, second, third, *etc.*) may be used as an adjective for an element (*i.e.*, any noun in the application). The use of ordinal numbers is not to imply or create any particular ordering of the elements, nor to limit any element to being only a single element unless expressly disclosed, such as by the use of the terms "before," "after," "single," and other such terminology. Rather, ordinal numbers distinguish between the elements. By way of an example, a first element is distinct from a second element, and the first element may encompass more than one element and succeed (or precede) the second element in an ordering of elements.

Further, unless expressly stated otherwise, the conjunction "or" is an inclusive "or" and, as such, automatically includes the conjunction "and," unless expressly stated otherwise. Further, items joined by the conjunction "or" may include any combination of the items with any number of each item, unless expressly stated otherwise.

In the above description, numerous specific details are set forth in order to provide a more thorough understanding of the disclosure. However, it will be apparent to one of ordinary skill in the art that the technology may be practiced without these specific details. In other instances, well-known features have not been described in detail to avoid unnecessarily complicating the description. Further, other embodiments not explicitly described above can be devised which do not depart from the scope of the claims as disclosed herein. Accordingly, the scope should be limited only by the attached claims.

Further examples of feature combinations taught by the present disclosure are set out in the following numbered clauses:
1. A method comprising:
   receiving an input to a language model having a first computational efficiency;
   determining, from the input, a pruning threshold;
   determining a pruning weight mask for the input from a combination of the pruning threshold and a predetermined weight mask defined for the language model;
   modifying, using the pruning weight mask, the language model to generate a modified language model having a second computational efficiency greater than the first computational efficiency;
   executing the modified language model on the input to generate a token; and
   returning the token.
2. The method of clause 1, further comprising:
   generating the predetermined weight mask defined for the language model.
3. The method of clause 1 or clause 2, wherein determining the pruning threshold comprises:
   executing a classifier model on the input to output the pruning threshold.
4. The method of any preceding clause, wherein the predetermined weight mask comprises a plurality of pruning values corresponding to a plurality of weights of the language model, and wherein determining the pruning weight mask comprises:
   comparing the pruning threshold to each of the plurality of pruning values to identify a subset of the plurality of pruning values that satisfy the pruning threshold; and
   identifying a subset of the plurality of weights corresponding to the subset of the plurality of pruning values,
   wherein determining the pruning weight mask comprises modifying the predetermined weight mask by identifying a plurality of reduction values for the subset of the plurality of weights.
5. The method of clause 4, wherein each of the plurality of reduction values comprises zero such that, when the pruning weight mask is applied to the plurality of weights, each of the subset of the plurality of weights of the language model is set to zero.
6. The method of clause 5, wherein modifying the language model comprises:
   modifying the plurality of weights according to the pruning weight mask by reducing each of the subset of the plurality of weights.
7. The method of any preceding clause, wherein modifying the language model causes the language model to use fewer execution cycles of a computer processor to process the input, relative to a number of execution cycles of the computer processor used by the language model to process the input prior to modifying the language model.
8. The method of any preceding clause, wherein modifying the language model comprises setting, according to the pruning weight mask, at least one of the weights in the predetermined weight mask to a value of zero.
9. A system comprising:
   a computer processor;
   a data repository in communication with the computer processor and storing:
      an input,
      a pruning threshold,
      a predetermined weight mask, and
      a pruning weight mask for the input;
   a language model in communication with the computer processor and having a first computational efficiency;
   a modified language model in communication with the computer processor and having a second computational efficiency greater than the first computational efficiency;
   a classifier model in communication with the computer processor; and
   a server controller configured, when executed by the computer processor, to:
      receive the input,
      execute the classifier model on the input to generate the pruning threshold,
      determine the pruning weight mask from a combination of the pruning threshold and the predetermined weight mask defined for the language model, and
      modify, using the pruning weight mask, the language model to generate the modified language model.
10. The system of clause 9, wherein the server controller is further configured to:
   generate the predetermined weight mask defined for the language model.
11. The system of clause 9 or clause 10, wherein the server controller is further configured to:
   execute the modified language model on the input to generate a token, and
   return the token to a user device.
12. The system of any of clauses 9 to 11,
   wherein the predetermined weight mask comprises a plurality of pruning values corresponding to a plurality of weights of the language model, and
   wherein determining the pruning weight mask comprises:
      comparing the pruning threshold to each of the plurality of pruning values to identify a subset of the plurality of pruning values that satisfy the pruning threshold, and
      identifying a subset of the plurality of weights corresponding to the subset of the plurality of pruning values, and
   wherein determining the pruning weight mask comprises modifying the predetermined weight mask by identifying a plurality of reduction values for the subset of the plurality of weights.
13. The system of clause 12, wherein each of the plurality of reduction values comprises zero such that, when the pruning weight mask is applied to the plurality of weights, each of the subset of the plurality of weights of the language model is set to zero.
14. The system of clause 12 or clause 13, wherein modifying the language model comprises:
   modifying the plurality of weights according to the pruning weight mask by reducing each of the subset of the plurality of weights.
15. The system of any of clauses 9 to 14, wherein modifying the language model causes the language model to use fewer execution cycles of the computer processor to process the input, relative to a number of execution cycles of the computer processor used by the language model to process the input prior to modifying the language model.
16. The system of any of clauses 9 to 15, wherein modifying the language model comprises setting, according to the pruning weight mask, at least one of the weights in the predetermined weight mask to a value of zero.
17. A method comprising:
   receiving a training input;
   iterating a process until convergence, the process comprising:
      executing a classifier model on the training input to generate an intermediate pruning threshold,
      generating, using the intermediate pruning threshold and a predetermined weight mask, an intermediate pruning weight mask,
      modifying, using the intermediate pruning weight mask, a language model to generate an intermediate modified language model, wherein using the intermediate pruning weight mask reduces at least one of a plurality of weights of the language model defined by the predetermined weight mask,
      executing the intermediate modified language model on the training input to generate an intermediate output,
      determining an intermediate computational efficiency of the intermediate modified language model when generating the intermediate output,
      determining an intermediate accuracy of the intermediate modified language model when generating the intermediate output,
      determining whether a combination of the intermediate computational efficiency and the intermediate accuracy satisfies an optimization value,
      generating, responsive to determining that the combination fails to satisfy the optimization value, a loss function, and
      applying the loss function to both the classifier model and the language model to generate an intermediate classifier model and an intermediate language model,
      wherein convergence occurs when the optimization value is satisfied, and upon convergence the intermediate language model is a trained language model and the intermediate classifier model is a trained classifier model; and
   returning the trained language model and the trained classifier model.
18. The method of clause 17, wherein the loss function comprises a combination of a cross entropy loss term applicable to the language model and a pruning loss term applicable to the classification model.
19. The method of clause 18, wherein the loss function further comprises a tuning constant applied to the pruning loss term.
20. The method of clause 19, wherein:
   the optimization value is satisfied when the loss function reaches a maximum,
   the cross entropy loss term is changed, during the process, to minimize a perplexity of the language model, and
   the pruning loss term and the tuning constant are changed, during the process, to minimize a number of weights used by the language model.

## Claims

1. A method comprising:
receiving an input to a language model having a first computational efficiency;
determining, from the input, a pruning threshold;
determining a pruning weight mask for the input from a combination of the pruning threshold and a predetermined weight mask defined for the language model;
modifying, using the pruning weight mask, the language model to generate a modified language model having a second computational efficiency greater than the first computational efficiency;
executing the modified language model on the input to generate a token; and
returning the token.

2. The method of claim 1, further comprising:
generating the predetermined weight mask defined for the language model.

3. The method of claim 1 or claim 2, wherein determining the pruning threshold comprises:
executing a classifier model on the input to output the pruning threshold.

4. The method of any preceding claim, wherein the predetermined weight mask comprises a plurality of pruning values corresponding to a plurality of weights of the language model, and wherein determining the pruning weight mask comprises:
comparing the pruning threshold to each of the plurality of pruning values to identify a subset of the plurality of pruning values that satisfy the pruning threshold; and
identifying a subset of the plurality of weights corresponding to the subset of the plurality of pruning values,
wherein determining the pruning weight mask comprises modifying the predetermined weight mask by identifying a plurality of reduction values for the subset of the plurality of weights.

5. The method of claim 4, wherein each of the plurality of reduction values comprises zero such that, when the pruning weight mask is applied to the plurality of weights, each of the subset of the plurality of weights of the language model is set to zero.

6. The method of claim 5, wherein modifying the language model comprises:
modifying the plurality of weights according to the pruning weight mask by reducing each of the subset of the plurality of weights.

7. The method of any preceding claim, wherein modifying the language model causes the language model to use fewer execution cycles of a computer processor to process the input, relative to a number of execution cycles of the computer processor used by the language model to process the input prior to modifying the language model.

8. The method of any preceding claim, wherein modifying the language model comprises setting, according to the pruning weight mask, at least one of the weights in the predetermined weight mask to a value of zero.

9. A system comprising:
a computer processor;
a data repository in communication with the computer processor and storing:
an input,
a pruning threshold,
a predetermined weight mask, and
a pruning weight mask for the input;
a language model in communication with the computer processor and having a first computational efficiency;
a modified language model in communication with the computer processor and having a second computational efficiency greater than the first computational efficiency;
a classifier model in communication with the computer processor; and
a server controller configured, when executed by the computer processor, to:
receive the input,
execute the classifier model on the input to generate the pruning threshold,
determine the pruning weight mask from a combination of the pruning threshold and the predetermined weight mask defined for the language model, and
modify, using the pruning weight mask, the language model to generate the modified language model.

10. The system of claim 9, wherein the server controller is further configured to:
generate the predetermined weight mask defined for the language model.

11. The system of claim 9 or claim 10, wherein the server controller is further configured to:
execute the modified language model on the input to generate a token, and
return the token to a user device.
a plurality of reduction values for the subset of the plurality of weights.

12. A method comprising:
receiving a training input;
iterating a process until convergence, the process comprising:
executing a classifier model on the training input to generate an intermediate pruning threshold,
generating, using the intermediate pruning threshold and a predetermined weight mask, an intermediate pruning weight mask,
modifying, using the intermediate pruning weight mask, a language model to generate an intermediate modified language model, wherein using the intermediate pruning weight mask reduces at least one of a plurality of weights of the language model defined by the predetermined weight mask,
executing the intermediate modified language model on the training input to generate an intermediate output,
determining an intermediate computational efficiency of the intermediate modified language model when generating the intermediate output,
determining an intermediate accuracy of the intermediate modified language model when generating the intermediate output,
determining whether a combination of the intermediate computational efficiency and the intermediate accuracy satisfies an optimization value,
generating, responsive to determining that the combination fails to satisfy the optimization value, a loss function, and
applying the loss function to both the classifier model and the language model to generate an intermediate classifier model and an intermediate language model,
wherein convergence occurs when the optimization value is satisfied, and upon convergence the intermediate language model is a trained language model and the intermediate classifier model is a trained classifier model; and
returning the trained language model and the trained classifier model.

13. The method of claim 12, wherein the loss function comprises a combination of a cross entropy loss term applicable to the language model and a pruning loss term applicable to the classification model.

14. The method of claim 13, wherein the loss function further comprises a tuning constant applied to the pruning loss term.

15. The method of claim 14, wherein:
the optimization value is satisfied when the loss function reaches a maximum,
the cross entropy loss term is changed, during the process, to minimize a perplexity of the language model, and
the pruning loss term and the tuning constant are changed, during the process, to minimize a number of weights used by the language model.
